(19) **Europäisches Patentamt / European Patent Office / Office européen des brevets**

(11) **EP 4 471 662 A1**

(12) **EUROPEAN PATENT APPLICATION**
published in accordance with Art. 153(4) EPC

(43) Date of publication:
04.12.2024 Bulletin 2024/49

(51) International Patent Classification (IPC):
*G06N 3/04* (2023.01)     *G06V 40/16* (2022.01)
*G06V 10/82* (2022.01)

(21) Application number: 22931668.2

(22) Date of filing: 26.07.2022

(86) International application number:
PCT/CN2022/107826

(87) International publication number:
WO 2023/173646 (21.09.2023 Gazette 2023/38)

(84) Designated Contracting States:
AL AT BE BG CH CY CZ DE DK EE ES FI FR GB
GR HR HU IE IS IT LI LT LU LV MC MK MT NL NO
PL PT RO RS SE SI SK SM TR
Designated Extension States:
BA ME
Designated Validation States:
KH MA MD TN

(30) Priority: 17.03.2022 CN 202210267533

(71) Applicant: Shenzhen Xumi Yuntu Space
Technology Co., Ltd.
Shenzhen, Guangdong 518054 (CN)

(72) Inventors:
• JIANG, Zhao
Shenzhen, Guangdong 518000 (CN)
• HUANG, Zeyuan
Shenzhen, Guangdong 518000 (CN)
• QI, Xiaoting
Shenzhen, Guangdong 518000 (CN)

(74) Representative: Bayramoglu et al.
Mira Office
Kanuni Sultan Süleyman Boulevard 5387
Street Beytepe, floor 12, no:50
06800 Cankaya, Ankara (TR)

(54) **EXPRESSION RECOGNITION METHOD AND APPARATUS**

(57) The present disclosure provides an expression recognition method and apparatus. The method includes: acquiring a to-be-recognized image; obtaining an image feature map of the to-be-recognized image according to the to-be-recognized image; determining global feature information and local feature information according to the image feature map; and determining an expression type of the to-be-recognized image according to the global feature information and the local feature information. Since the global feature information of the to-be-recognized image reflects overall information of a face and the local feature information of the to-be-recognized image reflects detail information of each region on the face, more image detail information of a facial expression can be recovered by means of an effective combination of the local feature information and the global feature information. Thus, the expression type of the to-be-recognized image determined according to the global feature information and the local feature information is more accurate; that is, accuracy of an expression type recognition result corresponding to the to-be-detected image can be improved, thereby improving user experience.

FIG. 1

**Description**

**TECHNICAL FIELD**

The present disclosure relates to the field of computer technologies, and in particular, to an expression recognition method and apparatus.

**BACKGROUND TECHNOLOGY**

With a development of an image processing technology, an image recognition technology is applied to more and more scenarios. The current image recognition technology achieves a good effect in recognition of a facial expression, but in a complex scenario, for example, key parts of a face are shielded, or a complete face cannot be collected due to different body postures (for example, leaning), such that the facial expression cannot be recognized or a recognition result of the facial expression is inaccurate. Therefore, there exists an urgent need for a new expression recognition solution.

**CONTENT OF THE INVENTION**

In view of this, embodiments of the present disclosure provide an expression recognition method and apparatus, a computer device, and a computer-readable storage medium, so as to solve the problems in the prior art that, in a complex scenario, for example, key parts of a face are shielded, or a complete face cannot be collected due to different body postures (for example, leaning), such that a facial expression cannot be recognized or a recognition result of the facial expression is inaccurate.

In a first aspect of the embodiments of the present disclosure, there is provided an expression recognition method, including:

acquiring a to-be-recognized image;
obtaining an image feature map of the to-be-recognized image according to the to-be-recognized image;
determining global feature information and local feature information according to the image feature map; and
determining an expression type of the to-be-recognized image according to the global feature information and the local feature information.

In a second aspect of the embodiments of the present disclosure, there is provided an expression recognition apparatus, including:

an image acquiring module configured to acquire a to-be-recognized image;
a first feature acquiring module configured to obtain an image feature map of the to-be-recognized image according to the to-be-recognized image;

a second feature acquiring module configured to determine global feature information and local feature information according to the image feature map; and

an expression type determining module configured to determine an expression type of the to-be-recognized image according to the global feature information and the local feature information.

In a third aspect of the embodiments of the present disclosure, there is provided a computer device, including a memory, a processor and a computer program stored in the memory and runnable on the processor, wherein the processor, when executing the computer program, implements the steps of the above method.

In a fourth aspect of the embodiments of the present disclosure, there is provided a computer-readable storage medium storing a computer program, wherein the computer program, when executed by a processor, implements the steps of the above method.

Compared with the prior art, the embodiments of the present disclosure have the following beneficial effects: in the embodiments of the present disclosure, the to-be-recognized image may be acquired first; then, the image feature map of the to-be-recognized image may be obtained according to the to-be-recognized image; next, the global feature information and the local feature information may be determined according to the image feature map; and finally, the expression type of the to-be-recognized image may be determined according to the global feature information and the local feature information. Since the global feature information of the to-be-recognized image reflects overall information of a face and the local feature information of the to-be-recognized image reflects detail information of each region on the face, more image detail information of a facial expression can be recovered by means of an effective combination of the local feature information and the global feature information. Thus, the expression type of the to-be-recognized image determined according to the global feature information and the local feature information is more accurate; that is, accuracy of an expression type recognition result corresponding to the to-be-detected image can be improved, thereby improving user experience.

**DESCRIPTION OF THE DRAWINGS**

In order to more clearly illustrate the technical solutions in the embodiments of the present disclosure, the accompanying drawings used in the description of the embodiments or the prior art will be briefly introduced below. It is apparent that, the accompanying drawings in the following description are only some embodiments of the present disclosure, and other drawings can be obtained by those of ordinary skill in the art from the provided drawings without creative efforts.

FIG. 1 is a schematic diagram of an application scenario of an embodiment of the present disclosure;

FIG. 2 is a flowchart of an expression recognition method according to the embodiment of the present disclosure;

FIG. 3 is a schematic diagram of a network architecture of an expression recognition model in the embodiment of the present disclosure;

FIG. 4 is a schematic flowchart of a GoF modulation process in the embodiment of the present disclosure;

FIG. 5 is a schematic diagram of a network architecture of a Local-Global Attention structure in the embodiment of the present disclosure;

FIG. 6 is a schematic diagram of a network architecture of a global model in the embodiment of the present disclosure;

FIG. 7 is a schematic diagram of a network architecture of a Split-Attention module in the embodiment of the present disclosure;

FIG. 8 is a schematic diagram of a network architecture of a weight layer in the embodiment of the present disclosure;

FIG. 9 is a block diagram of an expression recognition apparatus according to the embodiment of the present disclosure; and

FIG. 10 is a schematic diagram of a computer device according to the embodiment of the present disclosure.

## SPECIFIC IMPLEMENTATIONS

In the following description, for the purpose of illustration instead of limitation, specific details such as a particular system structure and a technology are provided to make the embodiments of the present disclosure understood thoroughly. However, it should be understood by those skilled in the art that the present disclosure can also be implemented in other embodiments without the specific details. In other cases, detailed description of well-known systems, apparatuses, circuits and methods is omitted, so that the present disclosure is described without being impeded by unnecessary details.

An expression recognition method and apparatus according to embodiments of the present disclosure will be described in detail below with reference to the accompanying drawings.

In the prior art, in a complex scenario, for example, key parts of a face are shielded, or a complete face cannot be collected due to different body postures (for example, leaning), such that a facial expression cannot be recognized or a recognition result of the facial expression is inaccurate. Therefore, there exists an urgent need for a new expression recognition solution.

In order to solve the above problems, the present invention provides an expression recognition method; in the method according to the present embodiment, a to-be-recognized image is acquired first; then, an image feature map of the to-be-recognized image may be obtained according to the to-be-recognized image; next, global feature information and local feature information may be determined according to the image feature map; and finally, an expression type of the to-be-recognized image may be determined according to the global feature information and the local feature information. Since the global feature information of the to-be-recognized image reflects overall information of a face and the local feature information of the to-be-recognized image reflects detail information of each region on the face, more image detail information of a facial expression can be recovered by means of an effective combination of the local feature information and the global feature information. Thus, the expression type of the to-be-recognized image determined according to the global feature information and the local feature information is more accurate; that is, accuracy of an expression type recognition result corresponding to the to-be-detected image can be improved, thereby improving user experience.

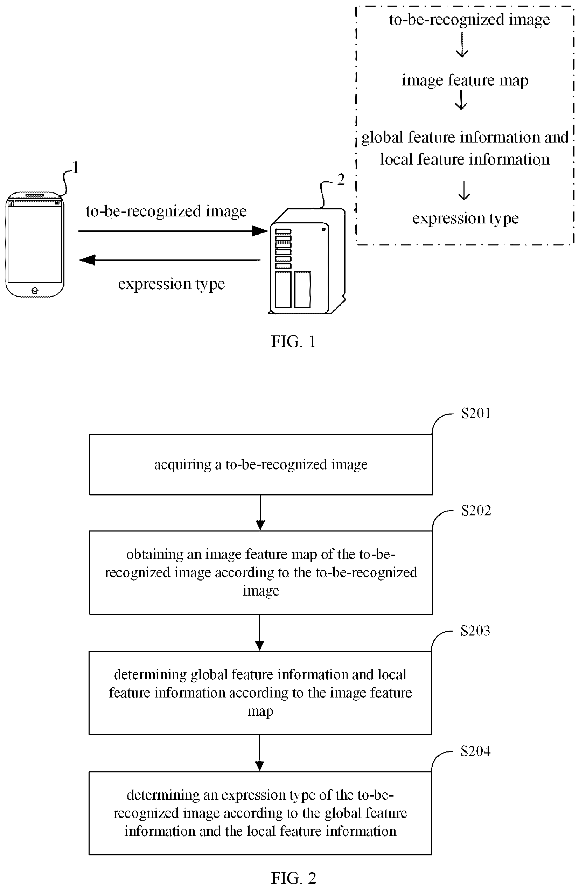

For example, the embodiment of the present invention may be applied to an application scenario as shown in FIG. 1. In this scenario, a terminal device 1 and a server 2 may be included.

The terminal device 1 may be hardware or software. When the terminal device 1 is hardware, the terminal device may be various electronic devices having functions of collecting images and storing the images, and supporting communication with the server 2, including but not limited to smart phones, tablet computers, laptop portable computers, digital cameras, monitors, video recorders, desktop computers, or the like; when the terminal device 1 is software, the terminal device may be installed in the electronic device as described above. The terminal device 1 may be implemented as a plurality of pieces of software or software modules, or may be implemented as a single piece of software or software module, which is not limited in the embodiment of the present disclosure. Further, various applications, such as an image collecting application, an image storing application, an instant chat application, or the like, may be installed on the terminal device 1.

The server 2 may be a server providing various services, for example, a background server receiving a request sent by a terminal device establishing communication connection with the server, and the background server may receive and analyze the request sent by the terminal device, and generate a processing result. The server 2 may be a server, or a server cluster composed of a plurality of servers, or a cloud computing service center, which is not limited in the embodiment of the present disclosure.

It should be noted that the server 2 may be hardware or software. When the server 2 is hardware, the server may be various electronic devices providing various services for the terminal device 1. When the server 2 is software, the server may be plural pieces of software or software modules providing various services for the terminal device 1, or may be a single piece of software or software module providing various services for the terminal device 1, which is not limited in the embodiment of the present disclosure.

The terminal device 1 and the server 2 may be communicatively connected through a network. The network may be a wired network formed by connection using a coaxial cable, a twisted pair cable, and an optical fiber, or may be a wireless network which can interconnect various communication devices without wiring, for example, Bluetooth, Near Field Communication (NFC), Infrared, or the like, which is not limited in the embodiment of the present disclosure.

Specifically, a user may determine a to-be-detected image by the terminal device 1, and send the to-be-detected image to the server 2. After receiving the to-be-detected image, the server 2 may extract an image feature map of the to-be-detected image. Then, the server 2 may determine global feature information and local feature information according to the image feature map. Next, the server 1 may determine an expression type of the to-be-recognized image according to the global feature information and the local feature information. In this way, since the global feature information of the to-be-recognized image reflects overall information of a face and the local feature information of the to-be-recognized image reflects detail information of each region on the face, more image detail information of a facial expression can be recovered by means of an effective combination of the local feature information and the global feature information. Thus, the expression type of the to-be-recognized image determined according to the global feature information and the local feature information is more accurate; that is, accuracy of an expression type recognition result corresponding to the to-be-detected image can be improved, thereby improving user experience.

It should be noted that specific types, numbers, and combinations of the terminal device 1, the server 2 and the network may be adjusted according to actual needs of the application scenario, which is not limited in the embodiment of the present disclosure.

It should be noted that the above application scenario is only shown for the convenience of understanding the present disclosure, and the embodiments of the present disclosure are not limited in any way in this respect. Rather, the embodiments of the present disclosure may be applied to any applicable scenario.

FIG. 2 is a flowchart of an expression recognition method according to the embodiment of the present disclosure. The expression recognition method of FIG. 2 may be performed by the terminal device and/or the server of FIG. 1. As shown in FIG. 2, the expression recognition method includes:

S201: acquiring a to-be-recognized image.

In the present embodiment, an image or a video frame requiring expression recognition may be referred to as the to-be-recognized image. A face requiring expression recognition may be referred to as a target face.

As an example, the terminal device may provide a page, the user may upload an image through the page and click a preset key to trigger expression recognition of the image, and at this point, the image may be used as the to-be-recognized image. Certainly, the user may also take a picture by using the terminal device to obtain the to-be-recognized image. In addition, the user is also required to determine the target face requiring recognition, or the system presets the target face requiring recognition.

S202: obtaining an image feature map of the to-be-recognized image according to the to-be-recognized image.

After the to-be-recognized image is acquired, the image feature map of the to-be-recognized image can be extracted for the to-be-recognized image. It can be understood that the image feature map of the to-be-recognized image is a complete feature map extracted from the to-be-recognized image, and can reflect overall image feature information of the to-be-recognized image.

S203: determining global feature information and local feature information according to the image feature map.

In a complex scenario, for example, key parts of a face are shielded, or a complete face cannot be collected due to different body postures (for example, leaning), such that an expression type of the face cannot be recognized or the recognized expression type of the face is inaccurate. In order to solve the above problem, in the present embodiment, after the image feature map of the to-be-recognized image is acquired, the global feature information and the local feature information of the target face in the image feature map may be determined according to the image feature map. The global feature information of the to-be-recognized image can reflect overall information of the face; that is, the global feature information of the to-be-recognized image can be understood as the overall information of the target face, such as a skin color, a contour, distribution of facial organs, or the like; the local feature information of the to-be-recognized image can reflect detail information of each region of the face; that is, the local feature information describes detail features of the target face, such as organ characteristics and facial special features, for example, scars, black nevi, dimples, or the like. It may be understood that the global feature information is used for coarse matching and the local feature information is used for fine matching. Therefore, more image detail information of the facial expression can be recovered by effectively combining the local feature information and the global feature information.

S204: determining an expression type of the to-be-recognized image according to the global feature information and the local feature information.

In the present embodiment, after the global feature information and the local feature information are determined, more image detail information of the facial expression can be recovered by using the global feature information and the local feature information, such that the expression type of the target face can be determined by using the recovered image detail information of the facial expression; thus, the expression type of the to-be-recognized image determined according to the global feature information and the local feature information may be more accurate, thereby improving accuracy of an expression type recognition result corresponding to the to-be-detected image.

Compared with the prior art, the embodiments of the present disclosure have the following beneficial effects: in the embodiments of the present disclosure, the to-be-recognized image may be acquired first; then, the image feature map of the to-be-recognized image may be obtained according to the to-be-recognized image; next, the global feature information and the local feature information may be determined according to the image feature map; and finally, the expression type of the to-be-recognized image may be determined according to the global feature information and the local feature information. Since the global feature information of the to-be-recognized image reflects overall information of a face and the local feature information of the to-be-recognized image reflects detail information of each region on the face, more image detail information of a facial expression can be recovered by means of an effective combination of the local feature information and the global feature information. Thus, the expression type of the to-be-recognized image determined according to the global feature information and the local feature information is more accurate; that is, accuracy of an expression type recognition result corresponding to the to-be-detected image can be improved, thereby improving user experience. That is, in the process of recognizing the expression type, context information of global features is introduced while attention is paid to local features, and a recognition performance can be obviously improved.

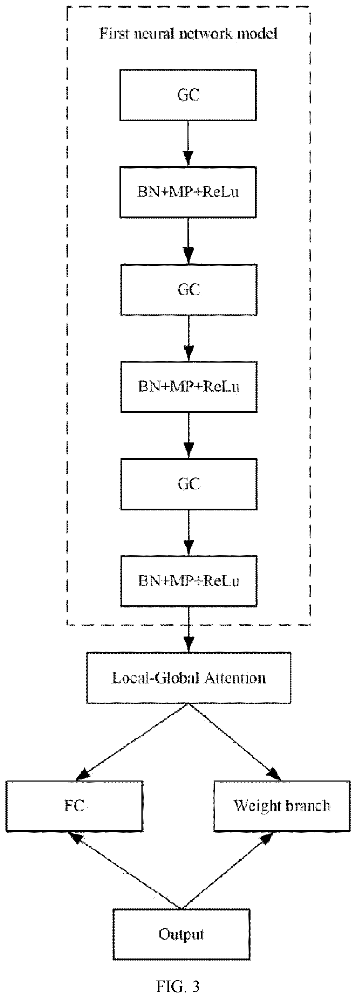

Next, an implementation of the S202 of obtaining an image feature map of the to-be-recognized image according to the to-be-recognized image is described. In the present embodiment, the method corresponding to FIG. 2 may be applied to an expression recognition model (as shown in FIG. 3), the expression recognition model may include a first neural network model, and the S202 of obtaining an image feature map of the to-be-recognized image according to the to-be-recognized image may include the following step:

inputting the to-be-recognized image into the first neural network model to obtain the image feature map of the to-be-recognized image.

The first neural network model includes a plurality of first convolution modules, the plural first convolution modules are connected in sequence, and each first convolution module includes a filter, a batch standardization layer, an MP model and an activation function. For example, as shown in FIG. 3, the first neural network model includes 3 first convolution modules, and each first convolution module includes a filter (for example, a GC module), a batch standardization layer (i.e., a BN layer), a Max Pooling (MP) model, and an activation function (i.e., ReLU).

The GC module is a convolution kernel with an added Gabor filter; it should be emphasized that, in the present embodiment, the GC module may be referred to as a GoF (i.e., a Gabor directional filter modulated by the Gabor filter on a conventional convolution kernel), and the GoF may enhance robustness (directional invariance and scale invariance) of a network for directional and scale changes. It should be noted that the Gabor filter has good characteristics, not only can keep frequency domain information in the image, but also has strong robustness for geometric transformation of a direction, a size, or the like, but an existing convolutional neural network does not have such characteristics, and therefore, the Gabor filter is suitable for facial expression recognition under a scenario with frequently changed directions and sizes; on the other hand, the facial expression recognition is more focused on the local features, such as noses, mouths, or the like, compared with other face tasks, and compared with the traditional convolutional neural network, the Gabor filter can extract richer local features. It can be understood that, after the Gabor filter is introduced into the GC module, on the one hand, the robustness of the network for the direction and scale changes can be enhanced, and on the other hand, a number of network layers is reduced, thus reducing a forward inference time of the model.

In the present embodiment, the modulation process of GoF is as follows.

The Gabor filter has U directions and V scales, and in order to incorporate manipulatable attributes into a GCN, direction information is encoded in a learned filter, and meanwhile, scale information is embedded into different convolution layers. Since the Gabor filter in the GoF captures the direction and scale information, corresponding convolution functions are enhanced.

A filter learned using a back propagation algorithm is called the learned filter. Unlike a standard convolutional neural network, the filter learned in the GCN is three-dimensional due to encoding of a directional channel. It is assumed that a size of the learned filter is $N \times W \times W$, $W \times W$ is the size of the filter, and $N$ denotes the channel. If a weight of each layer in the traditional CNN is represented as $C_{out} \times C_{in} \times W \times W$, the GCN is represented as $C_{out} \times C_{in} \times N \times W \times W$, and $C_{out}$ and $C_{in}$ represent channels of output and input feature maps respectively. In order to keep the number of the channels of the feature map uniform during forward convolution, $N$ is chosen to be U, i.e., the number of the directions of the Gabor filter for modulating the learned filter. On the basis of the given V scales, the GoF is obtained using the modulation process. For a V-th dimension,

$$C_{i,u}^{v} = C_{i,o} \ o \ G(u,v)$$

is defined.

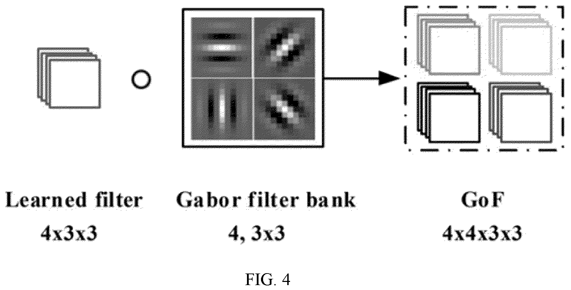

$C_{i,o}$ is a learned filter. $G(u, v)$ represents a group of Gabor filters with different directions and scales, *o* is an element-by-element product operation between G(u, v) and 2D filters, the modulation process is shown in FIG. 4, and then, the GoF is defined as:

$$C_i^v = (C_{i,1}^v, \dots, C_{i,U}^v)$$

In the GoF, a value of *v* increases with a number of layers, which means that a proportion of the Gabor filter in the GoF varies according to the number of the layers. On each scale, the size of the GoF is U×N×W×W. But since the Gabor filter is given, only N×W×W learned filters are saved, which indicates that enhanced functions can be obtained using this modulation without increasing a number of parameters.

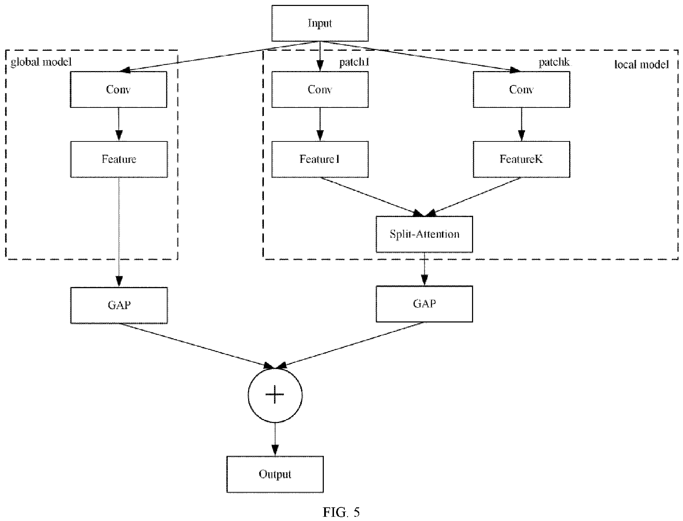

Next, an implementation of the S203 of determining global feature information and local feature information according to the image feature map is described. In the present embodiment, the method corresponding to FIG. 2 may be applied to the expression recognition model, and as shown in FIG. 3, the expression recognition model includes a Local-Global Attention structure; as shown in FIG. 5, the Local-Global Attention structure includes a global model and a local model, and the S203 of determining global feature information and local feature information according to the image feature map may include the following steps:

S203a: inputting the image feature map into the global model to obtain the global feature information.

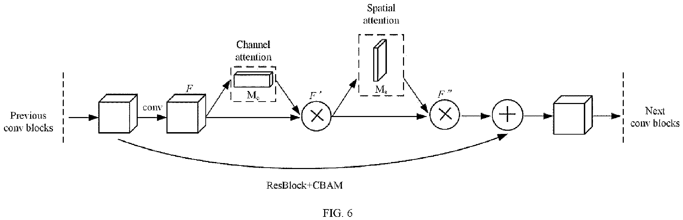

Conv and Feature layers in FIG. 5 are specifically shown in FIG. 6; that is, the global model includes a first convolution layer, an H-Sigmoid activation function layer (i.e., F in FIG. 6), a channel attention module (CAM, i.e., Channel attention in FIG. 6), a spatial attention module (SAM, i.e., Spatial attention in FIG. 6), and a second convolution layer. It may be understood that the channel attention module and the spatial attention module can be understood as a CBAM attention structure.

Specifically, the image feature map may be input into the first convolution layer to obtain a first feature map. Then, the first feature map can be input into the H-Sigmoid activation function layer to obtain a second feature map, and it should be noted that the H-Sigmoid activation function layer can avoid an exponential operation, such that a calculation speed can be increased. Then, the second feature map can be input into the channel attention module to obtain a channel attention map; it should be noted that the channel attention module is configured to learn a weight for each channel, and then multiply the weight to the corresponding channel, that is, multiply features of different channels in the second feature map by the corresponding weights respectively to obtain the channel attention map. Next, the channel attention map may be input to the spatial attention module to obtain a spatial attention map; the spatial attention module is configured to perform attention calculation on the channel attention map in a feature map space (i.e., in a width-height dimension), that is, learn a weight for a local region on each space in the channel attention map, and multiply the weight to the channel attention map to obtain the spatial attention map. Finally, the spatial attention map may be input to the second convolution layer to obtain the global feature information.

S203b: inputting the image feature map into the local model to obtain the local feature information.

In the present embodiment, as shown in FIG. 5, the local model may include N local feature extraction convolution layers (i.e., conv layer and feature layer, and k and N are the same value), and an attention module, and N is a positive integer greater than 1;

in the present embodiment, N local image blocks may be first generated according to the image feature map. For example, random cutting may be performed on the image feature map to obtain N different local image blocks, and each local image block includes local information of a different region. Then, the local image blocks may be input into the local feature extraction convolution layers to obtain N local feature maps; that is, each local feature extraction convolution layer outputs one local feature map.

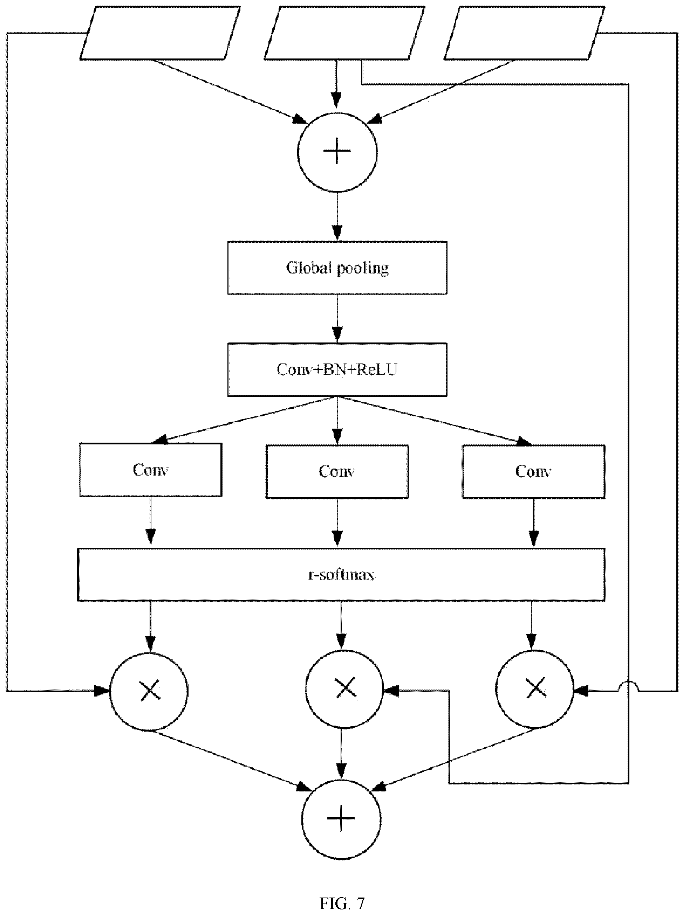

Then, the N local feature maps may be input to the attention module to obtain the local feature information. It should be noted that, in the present embodiment, the attention module may be a Split-Attention module shown in FIG. 7, and the attention module may include a pooling layer (i.e., Global Pooling in FIG. 7), a second convolution module (i.e., Conv+BN+ReLU in FIG. 7; that is, the second convolution module includes a convolution layer, a BN layer, and an ReLU function layer), N third convolution layers (i.e., Conv layers in FIG. 7), and a normalization layer (i.e., r-Softmax layer in FIG. 7). Specifically, as shown in FIG. 7, the N local feature maps may be fused to obtain a fused feature map. The fused feature map is input into the pooling layer to obtain a pooled feature map. The pooled feature map is input into the second convolution module to obtain a processed local feature map. The processed local feature maps are input into the third convolution layers respectively to obtain N sub-local feature maps; that is, the processed local feature maps are input into the independent third convolution layers for processing, and the sub-local feature maps are extracted. Each sub-local feature map is input into the normalization layer to obtain a weight value corresponding to the sub-local feature map, and a local feature map corresponding to the sub-local feature map is obtained according to the weight value and the local feature map corresponding to the sub-local feature map; that is, an r-Softmax operation is performed on the sub-local feature map by using the normalization layer to obtain the weight value corresponding to the sub-local feature map, and then, the local feature map corresponding to the sub-local feature map and the weight value corresponding to the sub-local feature map are multiplied to obtain the processed local feature map corresponding to the sub-local feature map. The N local feature maps (i.e., the processed local feature maps) are fused to obtain the local feature information.

Next, an implementation of the S204 of determining an expression type of the to-be-recognized image according to the global feature information and the local feature information is described. In the present embodiment, the S204 may include the following steps:

S204a: inputting the global feature information into a first global average pooling layer to obtain globally pooled feature information.

In the present embodiment, as shown in FIG. 5, the global model is further connected with the first global average pooling layer (i.e., GAP layer in FIG. 5), and after the global feature information is extracted, global average pooling (GAP) may be performed on the global feature information by using the first global average pooling layer, so as to obtain the globally pooled feature information.

S204b: inputting the local feature information into a second global average pooling layer to obtain locally pooled feature information.

In the present embodiment, as shown in FIG. 5, the local model is further connected with the second global average pooling layer (i.e., GAP layer in FIG. 5), and after the local feature information is extracted, global average pooling (GAP) may be performed on the local feature information by using the second global average pooling layer, so as to obtain the locally pooled feature information.

S204c: inputting the globally pooled feature information and the locally pooled feature information into a fully connected layer to obtain the expression type of the to-be-recognized image.

In the present embodiment, after the globally pooled feature information and the locally pooled feature information are obtained, the globally pooled feature information and the locally pooled feature information may be fused to obtain fused pooled feature information. Then, the fused pooled feature information is input into the fully connected layer (i.e., FC in FIG. 3) to obtain the expression type of the to-be-recognized image output by the fully connected layer.

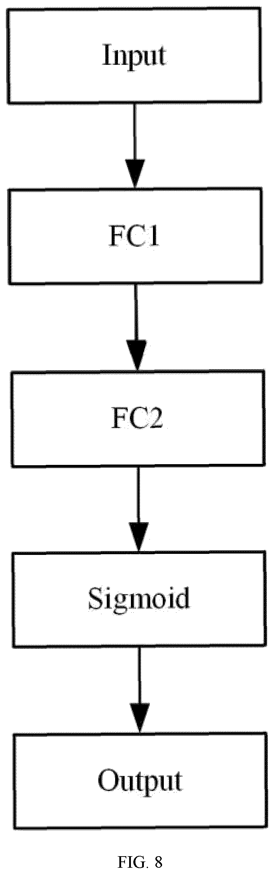

It should be noted that, in an implementation of the present embodiment, as shown in FIG. 3, the expression recognition model may further include a weight layer (i.e., Weight branch in FIG. 3); as shown in FIG. 8, the weight layer includes two fully connected layers (i.e., FC1 and FC2 in FIG. 8) and a Sigmoid activation layer (i.e., Sigmoid in FIG. 8). Specifically, the method corresponding to FIG. 2 further includes:

step 1: inputting the globally pooled feature information and the locally pooled feature information into the weight layer to obtain a real weight value of the expression type of the to-be-recognized image.

The real weight value of the expression type of the to-be-recognized image is used for representing the probability that the expression type is a real expression type corresponding to the to-be-recognized image, and in an implementation, the real weight value may range from 0 to 1. It can be understood that the larger the real weight value of the expression type of the to-be-recognized image is, the larger the probability that the expression type is the real expression type corresponding to the to-be-recognized image is, and conversely, the smaller the real weight value of the expression type of the to-be-recognized image is, the smaller the probability that the expression type is the real expression type corresponding to the to-be-recognized image is.

Step 2: determining an expression type detection result corresponding to the to-be-recognized image according to the real weight value of the expression type of the to-be-recognized image and the expression type of the to-be-recognized image.

In the present embodiment, if the real weight value of the expression type of the to-be-recognized image satisfies a preset condition, for example, the real weight value of the expression type of the to-be-recognized image is greater than a preset threshold, the expression type of the to-be-recognized image may be used as the expression type detection result corresponding to the to-be-recognized image. The preset threshold may be preset, for example, may be set by the user according to actual requirements. On the contrary, if the real weight value of the expression type of the to-be-recognized image does not satisfy the preset condition, for example, the real weight value of the expression type of the to-be-recognized image is less than or equal to the preset threshold, the expression type of the to-be-recognized image may not be taken as the expression type detection result corresponding to the to-be-recognized image, and the expression type detection result corresponding to the to-be-recognized image may be determined to be null.

It should be noted that, in the prior art, there is a problem of annotation uncertainty in a facial expression recognition data set, and on the one hand, the uncertainty is caused by subjectivity of an annotator, such that a same picture may have differences after annotated by different annotators; on the other hand, the uncertainty is caused by ambiguity of the facial expression picture; that is, one expression picture may include several different expressions, and furthermore, factors, such as shielding, illumination, picture quality, or the like, may also affect an annotation result. When training is performed using the data with uncertain annotations, learning of effective expression features is not facilitated, and the network may not converge in an initial stage of training, and therefore, an Attention Weighted Loss function is adopted to train the weight layer in the present embodiment. Specifically, after the features are extracted, a weight is learned for each sample using an added weight branch (i.e., the weight layer), the weight represents a degree of certainty of the current sample, and then, when loss is calculated, the loss of the training sample is weighted according to the calculated weight.

In the model training process, if the weight value calculated by the weight layer is smaller than a preset training value, the certainty of the current training sample is low, which does not facilitate optimization of the network, and therefore, the samples can be filtered using a manually set threshold; if the weight value calculated by the weight layer is larger than or equal to the preset training value, the certainty is high, and the higher the value is, the stricter the requirement for the certainty is, and some samples between the certainty and the uncertainty can be eliminated; moreover, the lower the weight value is, the larger the number of the samples contributing to the loss is, and the sample with low certainty (that is, the weight value calculated by the weight layer is smaller than the preset training value) is not used for calculating the loss, such that an accuracy rate of facial expression recognition can be obviously improved. After the training samples are filtered, the features of all the samples and the corresponding weights can be obtained, such that cross entropy can be calculated for each sample, and then, weighted summing is performed using these weights, or another weighting method is adopted; that is, weighting is performed using the calculated weights and the found features of the samples, and then, the loss is calculated using the weighted features.

It should be noted that, after the weight layer is added to the expression recognition model (i.e., one weight branch is added), the certainty of each sample is learned through the branch, and then, an influence of the uncertainty annotation on the training process of facial expression recognition can be suppressed by introducing the learned uncertainty into the Attention Weighted Loss.

All the above optional technical solutions may be combined arbitrarily to form optional embodiments of the present disclosure, and are not repeated herein.

An apparatus according to the embodiments of the present disclosure is described below, and may be configured to perform the method according to the embodiments of the present disclosure. For details not disclosed in the embodiments of the apparatus according to the present disclosure, reference is made to the embodiments of the method according to the present disclosure.

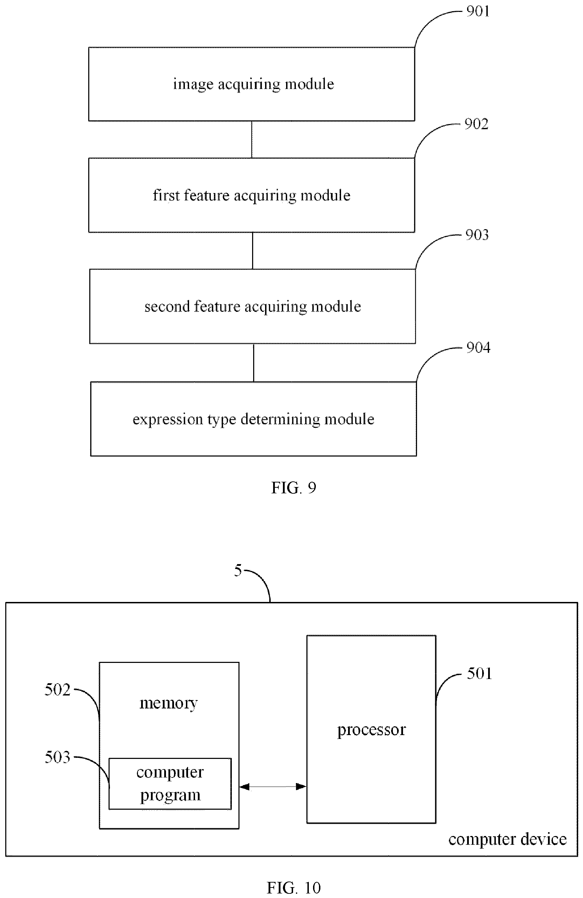

FIG. 9 is a schematic diagram of an expression recognition apparatus according to the embodiment of the present disclosure. As shown in FIG. 9, the expression recognition apparatus includes:

> an image acquiring module 901 configured to acquire a to-be-recognized image;
> a first feature acquiring module 902 configured to obtain an image feature map of the to-be-recognized image according to the to-be-recognized image;
> a second feature acquiring module 903 configured to determine global feature information and local feature information according to the image feature map; and

an expression type determining module 904 configured to determine an expression type of the to-be-recognized image according to the global feature information and the local feature information.

In some embodiments, the method is applied to an expression recognition model, and the expression recognition model includes a first neural network model; the first feature acquiring module 902 is specifically configured to:

> input the to-be-recognized image into the first neural network model to obtain the image feature map of the to-be-recognized image;
> the first neural network model includes a plurality of first convolution modules, the plural first convolution modules are connected in sequence, and each first convolution module includes a filter, a batch standardization layer, an MP model and an activation function.

In some embodiments, the method is applied to the expression recognition model, and the expression recognition model includes a global model and a local model; the second feature acquiring module 903 is specifically configured to:

> input the image feature map into the global model to obtain the global feature information; and
>
> input the image feature map into the local model to obtain the local feature information.

In some embodiments, the global model includes a first convolution layer, an H-Sigmoid activation function layer, a channel attention module, a spatial attention module, and a second convolution layer; the second feature acquiring module 903 is specifically configured to:

> input the image feature map into the first convolution layer to obtain a first feature map;
> input the first feature map into the H-Sigmoid activation function layer to obtain a second feature map;
> input the second feature map into the channel attention module to obtain a channel attention map;
> input the channel attention map into the spatial attention module to obtain a spatial attention map; and
> input the spatial attention map into the second convolution layer to obtain the global feature information.

In some embodiments, the local model includes N local feature extraction convolution layers and an attention module, and N is a positive integer greater than 1; the second feature acquiring module 903 is specifically configured to:

generate N local image blocks according to the image feature map;

input the local image blocks into the local feature extraction convolution layers to obtain N local feature maps; and

input the N local feature maps into the attention module to obtain the local feature information.

In some embodiments, the attention module includes a pooling layer, a second convolution module, N third convolution layers, and a normalization layer; the second feature acquiring module 903 is specifically configured to:

fuse the N local feature maps to obtain a fused feature map;

input the fused feature map into the pooling layer to obtain a pooled feature map;

input the pooled feature map into the second convolution module to obtain a processed local feature map;

input the processed local feature map into the third convolution layers to obtain N sub-local feature maps;

input each sub-local feature map into the normalization layer to obtain a weight value corresponding to the sub-local feature map; and obtain the local feature map corresponding to the sub-local feature map according to the weight value and the local feature map corresponding to the sub-local feature map; and

fuse the N local feature maps to obtain the local feature information.

In some embodiments, the expression type determining module 904 is configured to:

input the global feature information into a first global average pooling layer to obtain globally pooled feature information;

input the local feature information into a second global average pooling layer to obtain locally pooled feature information; and

input the globally pooled feature information and the locally pooled feature information into a fully connected layer to obtain the expression type of the to-be-recognized image.

In some embodiments, the expression recognition model further includes a weight layer; the weight layer includes two fully connected layers and a Sigmoid activation layer; the apparatus further includes a result determining module configured to:

input the globally pooled feature information and the locally pooled feature information into the weight layer to obtain a real weight value of the expression type of the to-be-recognized image; the real weight value of the expression type of the to-be-recognized image being used for representing the probability that the expression type is a real expression type corresponding to the to-be-recognized image; and

determine an expression type detection result corresponding to the to-be-recognized image according to the real weight value of the expression type of the to-be-recognized image and the expression type of the to-be-recognized image.

Compared with the prior art, the embodiments of the present disclosure have the following beneficial effects: the expression recognition apparatus according to the embodiments of the present disclosure includes: the image acquiring module 901 configured to acquire the to-be-recognized image; the first feature acquiring module 902 configured to obtain the image feature map of the to-be-recognized image according to the to-be-recognized image; the second feature acquiring module 903 configured to determine the global feature information and the local feature information according to the image feature map; and the expression type determining module 904 configured to determine the expression type of the to-be-recognized image according to the global feature information and the local feature information. Since the global feature information of the to-be-recognized image reflects overall information of a face and the local feature information of the to-be-recognized image reflects detail information of each region on the face, more image detail information of a facial expression can be recovered by means of an effective combination of the local feature information and the global feature information. Thus, the expression type of the to-be-recognized image determined according to the global feature information and the local feature information is more accurate; that is, accuracy of an expression type recognition result corresponding to the to-be-detected image can be improved, thereby improving user experience.

It should be understood that, the sequence numbers of the steps in the foregoing embodiments do not imply an execution sequence, and the execution sequence of each process should be determined by functions and internal logic of the process, and should not constitute any limitation to the implementation process of the embodiments of the present disclosure.

FIG. 10 is a schematic diagram of a computer device 10 according to the embodiment of the present disclosure. As shown in FIG. 10, the computer device 10 according to the present embodiment includes: a processor 1001, a memory 1002, and a computer program 1003 stored in the memory 1002 and executable on the processor 1001. The steps in the various method embodiments described above are implemented when the processor 1001 executes the computer program 1003. Alternatively, the processor 1001 achieves the functions of each module/unit in each apparatus embodiment described above when executing the computer program 1003.

Exemplarily, the computer program 1003 may be partitioned into one or more modules/units, which are stored in the memory 1002 and executed by the processor 1001 to complete the present disclosure. One or more of the modules/units may be a series of computer program instruction segments capable of performing specific functions, the instruction segments describing the execution of the computer program 1003 in the computer device 10.

The computer device 10 may be a desktop computer, a notebook, a palm computer, a cloud server or another computer device. The computer device 10 may include, but is not limited to, the processor 1001 and the memory 1002. Those skilled in the art may understand that a structure shown in FIG. 10 is only an example of the computer device 10 and does not limit the computer device 10, which may include more or fewer components than those shown in the drawings, or some components may be combined, or a different component deployment may be used. For example, the computer device may further include an input/output device, a network access device, a bus, or the like.

The processor 1001 may be a Central Processing Unit (CPU), or other general-purpose processors, Digital Signal Processors (DSP), Application Specific Integrated Circuits (ASIC), Field-Programmable Gate Arrays (FPGA) or other programmable logic devices, discrete gates or transistor logic devices, discrete hardware components, etc. The general-purpose processor may be a microprocessor or the processor may be any general processor, or the like.

The memory 1002 may be an internal storage module of the computer device 10, for example, a hard disk or memory of the computer device 10. The memory 1002 may also be an external storage device of the computer device 10, such as a plug-in hard disk, a Smart Media Card (SMC), a Secure Digital (SD) Card, a Flash Card, or the like, configured on the computer device 10. Further, the memory 1002 may also include both the internal storage module and the external storage device of the computer device 10. The memory 1002 is configured to store the computer program and other programs and data required by the computer device. The memory 1002 may be further configured to temporarily store data which has been or will be outputted.

It may be clearly understood by those skilled in the art that, for convenient and brief description, division of the above functional units and modules is used as an example for illustration. In practical application, the above functions can be allocated to different functional units and modules and implemented as required; that is, an internal structure of the apparatus is divided into different functional units or modules to accomplish all or some of the functions described above. The functional units or modules in the embodiments may be integrated into one processing module, or each of the modules may exist alone physically, or two or more modules are integrated into one module, and the integrated module may be implemented in a form of hardware, or may also be implemented in a form of a software functional module. In addition, specific names of all the functional units or modules are merely for facilitating the differentiation, but are not intended to limit the protection scope of this disclosure. For a specific working process of the units or modules in the above system, reference may be made to the corresponding process in the foregoing method embodiments, which is not repeated herein.

In the above embodiments, the description of each embodiment has its own emphasis. For a part not described in detail in one embodiment, reference may be made to relevant description of other embodiments.

Those of ordinary skill in the art would appreciate that the modules and algorithmic steps of the examples described in combination with the embodiments disclosed herein can be implemented by electronic hardware or a combination of computer software and electronic hardware. Whether these functions are performed by hardware or software depends on a specific application and design constraints of the technical solution. Technical professionals may achieve the described functions in different methods for each particular application, but such implementation should not be considered beyond the scope of the present disclosure.

In the embodiments according to the present disclosure, it is to be understood that the disclosed apparatus/computer device and method can be implemented in other ways. For example, the embodiment of the apparatus/computer device described above is merely schematic. For example, the division of the modules or units is merely logical function division, and there may be other division manners in an actual implementation. For example, a plurality of modules or components may be combined or integrated into another system, or some features may be ignored or not performed. In addition, the displayed or discussed mutual coupling or direct coupling or communication connection may be implemented by using some interfaces. The indirect coupling or communication connection between apparatuses or modules may be implemented in an electric form, a mechanical form, or other forms.

The modules described as separate parts may or may not be physically separate, and parts displayed as modules may or may not be physical modules, may be located at one position, or may be distributed on a plurality of network modules. Some or all of the modules may be selected according to actual needs to achieve the objectives of the solutions of the embodiments.

In addition, the functional modules in the embodiments of the present disclosure may be integrated into one processing module, or each of the modules may exist alone physically, or two or more modules are integrated into one module. The integrated module may be implemented in a form of hardware or in a form of a software functional module.

The integrated module/unit may be stored in a computer-readable storage medium when implemented in the form of the software functional module and sold or used as a separate product. Based on such understanding, all or some of the processes in the method according to the above embodiments may be realized in the present disclosure, or completed by the computer program instructing related hardware, the computer program may be stored in the computer-readable storage medium, and when the computer program is executed by the processor, the steps of the above method embodiments may be realized. The computer program may include a computer program code, which may be in a form of a source code, an object code or an executable file or in some intermediate forms. The computer-readable medium may include any entity or apparatus capable of carrying the computer program code, a recording medium, a USB flash drive, a removable hard disk, a magnetic disk, an optical disk, a computer memory, a Read-Only Memory (ROM), a Random Access Memory (RAM), an electrical carrier signal, a telecommunication signal, a software distribution medium, and so on. It should be noted that content included in the computer-readable medium may be appropriately increased or decreased according to requirements of legislation and patent practice in a jurisdiction, for example, in some jurisdictions, according to legislation and patent practice, the computer-readable medium does not include the electrical carrier signal and the telecommunication signal.

The above embodiments are merely intended to describe the technical solutions of the present disclosure, but not to limit the present disclosure. Although the present disclosure is described in detail with reference to the foregoing embodiments, those of ordinary skill in the art should understand that they may still make modifications to the technical solutions described in the foregoing embodiments or make equivalent replacements to some technical features thereof. Such modifications or replacements do not cause the essence of the corresponding technical solutions to depart from the spirit and scope of the technical solutions of the embodiments of the present disclosure, and should be included in the protection scope of the present disclosure.

**Claims**

1. An expression recognition method, comprising:

   acquiring a to-be-recognized image;
   obtaining an image feature map of the to-be-recognized image according to the to-be-recognized image;
   determining global feature information and local feature information according to the image feature map; and
   determining an expression type of the to-be-recognized image according to the global feature information and the local feature information.

2. The method according to claim 1, wherein the method is applied to an expression recognition model, and the expression recognition model comprises a first neural network model; the obtaining an image feature map of the to-be-recognized image according to the to-be-recognized image comprises:

   inputting the to-be-recognized image into the first neural network model to obtain the image feature map of the to-be-recognized image;
   the first neural network model comprises a plurality of first convolution modules, the plural first convolution modules are connected in sequence, and each first convolution module comprises a filter, a batch standardization layer, an MP model and an activation function.

3. The method according to claim 1, wherein the method is applied to an expression recognition model, and the expression recognition model comprises a global model and a local model; the determining global feature information and local feature information according to the image feature map comprises:

   inputting the image feature map into the global model to obtain the global feature information; and
   inputting the image feature map into the local model to obtain the local feature information.

4. The method according to claim 3, wherein the global model comprises a first convolution layer, an H-Sigmoid activation function layer, a channel attention module, a spatial attention module, and a second convolution layer; the inputting the image feature map into the global model to obtain the global feature information comprises:

   inputting the image feature map into the first convolution layer to obtain a first feature map;
   inputting the first feature map into the H-Sigmoid activation function layer to obtain a second feature map;
   inputting the second feature map into the channel attention module to obtain a channel attention map;
   inputting the channel attention map into the spatial attention module to obtain a spatial attention map; and
   inputting the spatial attention map into the second convolution layer to obtain the global feature information.

5. The method according to claim 3, wherein the local model comprises N local feature extraction convolution layers and an attention module, and N is a positive integer greater than 1; the inputting the image feature map into the local model to obtain the local feature information comprises:

generating N local image blocks according to the image feature map;

inputting the local image blocks into the local feature extraction convolution layers to obtain N local feature maps; and

inputting the N local feature maps into the attention module to obtain the local feature information.

6. The method according to claim 5, wherein the attention module comprises a pooling layer, a second convolution module, N third convolution layers, and a normalization layer; the inputting the N local feature maps into the attention module to obtain the local feature information comprises:

fusing the N local feature maps to obtain a fused feature map;

inputting the fused feature map into the pooling layer to obtain a pooled feature map;

inputting the pooled feature map into the second convolution module to obtain a processed local feature map;

inputting the processed local feature map into the third convolution layers to obtain N sub-local feature maps;

inputting each sub-local feature map into the normalization layer to obtain a weight value corresponding to the sub-local feature map; and obtaining the local feature map corresponding to the sub-local feature map according to the weight value and the local feature map corresponding to the sub-local feature map; and

fusing the N local feature maps to obtain the local feature information.

7. The method according to claim 5, wherein the determining an expression type of the to-be-recognized image according to the global feature information and the local feature information comprises:

inputting the global feature information into a first global average pooling layer to obtain globally pooled feature information;

inputting the local feature information into a second global average pooling layer to obtain locally pooled feature information; and

inputting the globally pooled feature information and the locally pooled feature information into a fully connected layer to obtain the expression type of the to-be-recognized image.

8. The method according to claim 7, wherein the expression recognition model further comprises a weight layer; the weight layer comprises two fully connected layers and a Sigmoid activation layer; the method further comprises:

inputting the globally pooled feature information and the locally pooled feature information into the weight layer to obtain a real weight value of the expression type of the to-be-recognized image; the real weight value of the expression type of the to-be-recognized image being used for representing the probability that the expression type is a real expression type corresponding to the to-be-recognized image; and

determining an expression type detection result corresponding to the to-be-recognized image according to the real weight value of the expression type of the to-be-recognized image and the expression type of the to-be-recognized image.

9. An expression recognition apparatus, comprising:

an image acquiring module configured to acquire a to-be-recognized image;

a first feature acquiring module configured to obtain an image feature map of the to-be-recognized image according to the to-be-recognized image;

a second feature acquiring module configured to determine global feature information and local feature information according to the image feature map; and

an expression type determining module configured to determine an expression type of the to-be-recognized image according to the global feature information and the local feature information.

10. A computer device, comprising a memory, a processor and a computer program stored in the memory and runnable on the processor, wherein the processor, when executing the computer program, implements the steps of the method according to claim 1.

11. A computer-readable storage medium storing a computer program, wherein the computer program, when executed by a processor, implements the steps of the method according to claim 1.

to-be-recognized image

↓

image feature map

↓

global feature information and local feature information

↓

expression type

1

to-be-recognized image →

← expression type

2

FIG. 1

acquiring a to-be-recognized image

S201

obtaining an image feature map of the to-be-recognized image according to the to-be-recognized image

S202

determining global feature information and local feature information according to the image feature map

S203

determining an expression type of the to-be-recognized image according to the global feature information and the local feature information

S204

FIG. 2

First neural network model

GC

↓

BN+MP+ReLu

↓

GC

↓

BN+MP+ReLu

↓

GC

↓

BN+MP+ReLu

↓

Local-Global Attention

FC            Weight branch

Output

FIG. 3

Learned filter          Gabor filter bank                    GoF
4x3x3                        4, 3x3                        4x4x3x3

FIG. 4

FIG. 5

Channel
attention

Spatial
attention

$M_c$

$M_s$

Previous
conv blocks

conv

$F$

$F'$

$F''$

Next
conv blocks

ResBlock+CBAM

FIG. 6

FIG. 7

FIG. 8

image acquiring module — 901

first feature acquiring module — 902

second feature acquiring module — 903

expression type determining module — 904

FIG. 9

5

memory

502

503 — computer program

processor — 501

computer device

FIG. 10

## INTERNATIONAL SEARCH REPORT

| International application No. |
| --- |
| **PCT/CN2022/107826** |

**A. CLASSIFICATION OF SUBJECT MATTER**

G06N 3/04(2006.01)i; G06V 40/16(2022.01)i; G06V 10/82(2022.01)n

According to International Patent Classification (IPC) or to both national classification and IPC

**B. FIELDS SEARCHED**

Minimum documentation searched (classification system followed by classification symbols)

G06N; G06V

Documentation searched other than minimum documentation to the extent that such documents are included in the fields searched

Electronic data base consulted during the international search (name of data base and, where practicable, search terms used)

CNPAT, WPI, EPODOC, CNKI, IEEE: 表情识别, 全局, 局部, 整体, 特征, 融合, 滤波器, 主干, 骨干, 共享, 分块, 区块, 加权, 权重, 分离注意力, 空间注意力, 通道注意力, face expression, global, local, fusion, gabor, backbone, channel, spatial, attention, weight, split attention, CBAM

**C. DOCUMENTS CONSIDERED TO BE RELEVANT**

| Category* | Citation of document, with indication, where appropriate, of the relevant passages | Relevant to claim No. |
| --- | --- | --- |
| PX | CN 114612987 A (SHENZHEN INTELLECTUAL DIGITAL SCIENCE AND TECHNOLOGY LIMITED COMPANY) 10 June 2022 (2022-06-10) claims 1-11 | 1-11 |
| X | CN 112651301 A (ZHEJIANG UNIVERSITY OF TECHNOLOGY) 13 April 2021 (2021-04-13) description, paragraphs 0035-0079 | 1, 3, 9-11 |
| Y | CN 112651301 A (ZHEJIANG UNIVERSITY OF TECHNOLOGY) 13 April 2021 (2021-04-13) description, paragraphs 0035-0079 | 2, 4-8 |
| Y | CN 111401156 A (SOUTHEAST UNIVERSITY) 10 July 2020 (2020-07-10) description, paragraphs 0027-0028 | 2 |
| Y | WOO, Sanghyun et al. "CBAM: Convolutional Block Attention Module" *"arXiv:1807.06521"*, 18 July 2018 (2018-07-18), figure 3 | 4 |

☑ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
| --- | --- |
| **11 November 2022** | **28 November 2022** |

| Name and mailing address of the ISA/CN | Authorized officer |
| --- | --- |
| **China National Intellectual Property Administration (ISA/CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**

International application No.

**PCT/CN2022/107826**

**C.     DOCUMENTS CONSIDERED TO BE RELEVANT**

| Category* | Citation of document, with indication, where appropriate, of the relevant passages | Relevant to claim No. |
|---|---|---|
| A | CN 113963422 A (SHANGHAI UNIVERSITY OF ELECTRIC POWER) 21 January 2022 (2022-01-21)<br>    entire document | 1-11 |
| A | CN 110580461 A (GUILIN UNIVERSITY OF ELECTRONIC TECHNOLOGY) 17 December 2019 (2019-12-17)<br>    entire document | 1-11 |
| A | CN 113936309 A (NANJING UNIVERSITY) 14 January 2022 (2022-01-14)<br>    entire document | 1-11 |

Form PCT/ISA/210 (second sheet) (January 2015)

**INTERNATIONAL SEARCH REPORT**
Information on patent family members

International application No.

**PCT/CN2022/107826**

| Patent document cited in search report | | | Publication date (day/month/year) | Patent family member(s) | Publication date (day/month/year) |
|---|---|---|---|---|---|
| CN | 114612987 | A | 10 June 2022 | None | |
| CN | 112651301 | A | 13 April 2021 | None | |
| CN | 111401156 | A | 10 July 2020 | None | |
| CN | 113963422 | A | 21 January 2022 | None | |
| CN | 110580461 | A | 17 December 2019 | None | |
| CN | 113936309 | A | 14 January 2022 | None | |

Form PCT/ISA/210 (patent family annex) (January 2015)